# EUROPEAN PATENT APPLICATION

(11) **EP 3 313 068 A1**
(43) Date of publication of application: **25.04.2018**
(21) Application number: 16810907.2
(22) Date of filing: 30.05.2016
(51) Int. Cl.: H04N 7/18

(54) **SMART HOME VIDEO MONITORING METHOD AND DEVICE**

(30) Priority: 16.06.2015 CN 201510332615
(71) Applicant: Hangzhou Ezviz Network Co., Ltd., Hangzhou, Zhejiang 310051 (CN)
(72) Inventor: HUANG, Sheng, Hangzhou Zhejiang 310051 (CN); DU, Anqiang, Hangzhou Zhejiang 310051 (CN); BAO, Dunqiao, Hangzhou Zhejiang 310051 (CN); JIN, Shengyang, Hangzhou Zhejiang 310051 (CN); JIANG, Haiqing, Hangzhou Zhejiang 310051 (CN)
(74) Representative: Hewett, Jonathan Michael Richard
(86) International application number: PCT/CN2016/083939
(87) International publication number: WO 2016/202166

(57) **Abstract**

Provided are a video monitoring method and system based on smart home. In the method and the system, a triggering condition of image capturing is preset and stored, wherein the triggering condition is appearance of a specific person in an image and specific performance of the specific person; whether a current image meets the triggering condition or not is detected in real time; when a detecting result is that the current image meets the triggering condition, the current image is captured, the captured image is classified according to different specific performance of the specific person, and the classified image is stored in a timeline form; and an access right and a sending right are set for the classified image stored in the timeline form. According to the present disclosure, the images meeting the triggering condition are captured, the captured images are classified according to different emotions, the classified images are stored according to a time sequence, and different access rights and sending rights are set for the stored images, so that a mobile terminal or client can receive or access in real time the images of the specific person in different emotions.

## Description

### Technical Field

The present disclosure belongs to the field of smart home, and particularly relates to a video monitoring method and system based on smart home.

### Background

An existing smart home system formed by a camera, a sensor and a mobile terminal may merely be simply triggered according to an event to capture an event image, wherein the image includes a static picture and a dynamic video, and the image is provided for a user to view for knowing about a security condition in a home. Therefore the existing smart home merely has an undiversified function.

In the home serving as a place where relatives reside and live, a user expects the smart home system to control home security and also differently classify and manage daily video images. For example, a growth image file is automatically generated according to images, captured by a camera every day, of a child, and interesting images of the child in the home can be automatically shared to close relatives, friends and the like, so that value besides home security is created for the user, and the smart home system is closer to a home life scenario. However, the existing smart home system does not have such a function.

### Summary

A video monitoring method and system based on smart home are provided. Images of triggering objects and triggering scenarios which consistent with triggering conditions are captured, according to the triggering conditions, the images are stored in a timeline form in corresponding folders and different rights are set for mobile terminals to enable the mobile terminals to receive or access in real time the images of different scenarios in the corresponding folders. Therefore, the present disclosure can closer to a family life scenario besides providing a common security function.

According to an aspect of the present disclosure, a video monitoring method based on smart home is provided, including: presetting and storing a triggering condition of image capturing, wherein the triggering condition is appearance of a specific person in an image and specific performance of the specific person; detecting in real time whether a current image meets the triggering condition or not; when a detecting result is that the current image meets the triggering condition, capturing the current image, classifying the captured image according to different specific performance of the specific person, and storing the classified image in a timeline form; and setting an access right and a sending right for the classified image stored in the timeline form.

According to an example embodiment, the specific person is a preset target person, and the specific performance is an emotion change.

According to an example embodiment, classifying the captured image according to different specific performance of the specific person includes: capturing images of the specific person in different emotions, and classifying the captured images according to corresponding emotions.

According to an example embodiment, storing the classified image in the timeline form includes: storing images of a same class in one large file, and storing in the timeline form the images of the same class in the same period of time, wherein the same period of time includes at least one of: an hour, a day, a week, a month and a year.

According to an example embodiment, setting the access and sending right includes: setting different access and different sending rights for images of different classes.

According to another aspect of the present disclosure, a video monitoring system based on smart home is provided, including: capturing equipment, configured to capture an image according to a preset triggering condition and send the captured image to storage equipment, wherein the triggering condition is appearance of a specific person in the image and specific performance of the specific person; the storage equipment, configured to receive the image sent by the capturing equipment, classify the captured image according to different specific performance of the specific person and store the classified image in a timeline form; and a mobile terminal or client, configured to set the triggering condition of image capturing, set an access right and a sending right for the image stored in the storage equipment, and access and receive the image stored in the storage equipment.

According to an example embodiment, the specific person is a preset target person, and the specific performance may be an emotion change.

According to an example embodiment, the storage equipment, configured to store images of a same class in one large file and store in the timeline form the images of the same class in the same period of time, wherein the same period of time includes at least one of: an hour, a day, a week, a month and a year.

According to an example embodiment, the storage equipment includes local storage equipment and/or cloud storage equipment.

According to an example embodiment, the mobile terminal or client, configured to set the access right and the sending right for the image stored in the storage equipment, including, to set different access right levels and different sending right levels for images of different classes.

As mentioned above, according to the present disclosure, the images meeting the triggering condition are captured, the captured images are classified according to different emotions, the classified images are stored according to a time sequence, and different access rights and the different sending rights are set for the stored images, so that the mobile terminal or client can receive or access in real time the images of the specific person in different emotions. Therefore, the present disclosure can closer to family life besides providing a common security function.

### Brief Description of the Drawings

Fig. 1 is a flowchart of a video monitoring method based on smart home according to the present disclosure;
Fig. 2 is a structure diagram of a video monitoring system based on smart home according to the present disclosure;
Fig. 3 is a structure diagram of a system according to a specific example of the present disclosure;
Fig. 4 is a schematic diagram of storing a captured image according to a timeline in a specific example of the present disclosure; and
Fig. 5 is a diagram of interface display when a smiling folder is accessed according to a specific example of the present disclosure.

### Detailed Description of the Embodiments

In order to make the purpose, technical solutions and advantages of the present disclosure clearer, the present disclosure will be further described below in detail with reference to specific implementation modes and the drawings. It should be understood that these descriptions are merely exemplary and not intended to limit the scope of the present disclosure. In addition, in the following specification, descriptions about known structures and technologies are eliminated to avoid unnecessary confusion about the concept of the present disclosure.

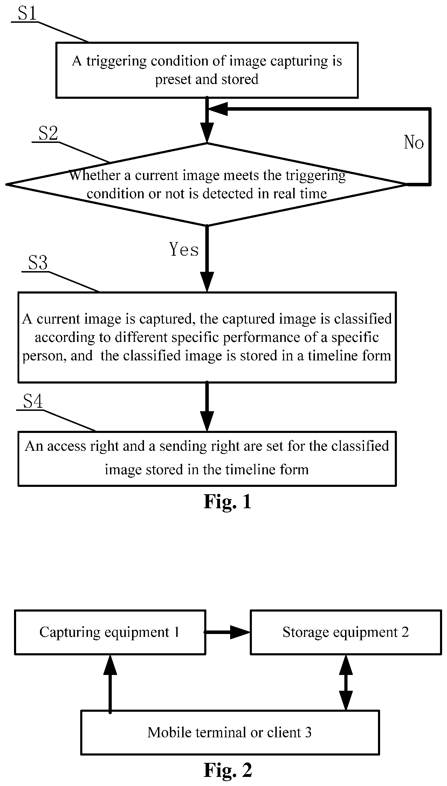

Fig. 1 is a flowchart of a video monitoring method based on smart home according to the present disclosure.

As shown in Fig. 1, a user presets and stores a triggering condition of image capturing, wherein the triggering condition is appearance of a specific person in an image and specific performance of the specific person. In the present disclosure, whether a current image acquired by capturing equipment meets the preset triggering condition of image capturing or not is detected in real time. When a detecting result is that the current image acquired by capturing equipment meets the preset triggering condition of image capturing, the current image is captured, the captured image is further classified according to different specific performance of the specific person, and the classified image is stored according to a time sequence. Otherwise (that is, when the preset triggering condition of image capturing is not met), whether a next image acquired by the capturing equipment meets the triggering condition of image capturing or not is continued to be detected. Here, the captured image includes a static picture and a dynamic video.

The video monitoring method based on smart home according to the present disclosure includes the following steps.

Step S1: A triggering condition of image capturing is preset and stored.

The step involves presetting and storage of the triggering condition of image capturing. In the present disclosure, the triggering condition is appearance of a specific person in an image and specific performance of the specific person. The specific person is a preset target person, and the specific performance is an emotion change. For example, the triggering condition of image capturing is set to be that: an image is captured when a child smiles or cries.

In the present disclosure, the triggering condition is not limited to the triggering condition described in the present disclosure, and the user may define another triggering condition and an image is captured according to the other triggering condition which is defined.

Step S2: Whether a current image meets the triggering condition or not is detected in real time.

In the step, the image is captured by detecting in real time whether the current image meets the triggering condition or not. When a detecting result is that the current image meets the triggering condition, Step S3 is executed, and when the detecting result is that the current image does not meet the triggering condition, Step S2 is re-executed.

Step S3: The current image is captured, the captured image is classified according to different specific performance of the specific person, and the classified image is stored in a timeline form.

When the detecting result of Step S2 is that the triggering condition is met, that is, the specific person appears in the current image and the specific person has the specific performance, the current image is captured. When the detecting result of Step S2 is that the triggering condition is not met, that is, the specific person does not appear in the current image or the specific person appears but the specific person does not have the specific performance, whether a next image meets the triggering condition of image capturing or not is continued to be detected. For example, once the child smiles or cries, the current image is captured.

The step of classifying the captured image according to different specific performance of the specific person includes: images of the specific person in different emotions are captured, and the captured images are classified according to the corresponding emotions.

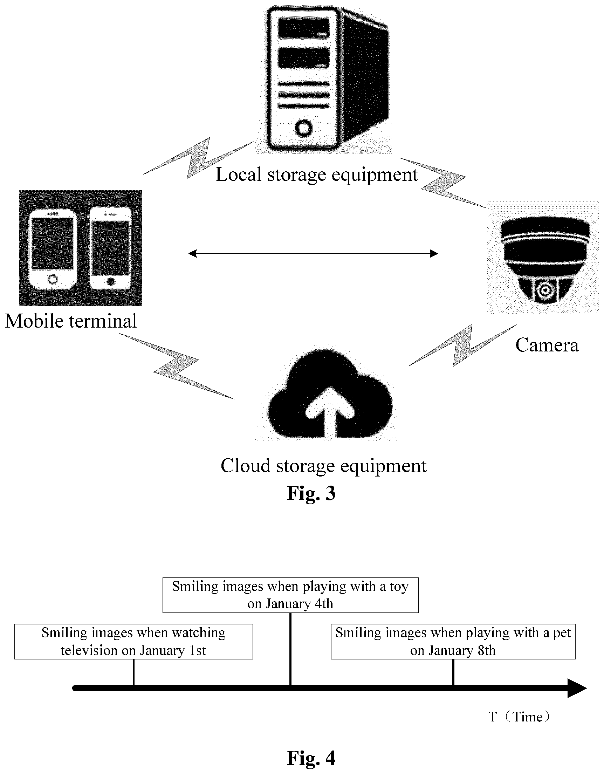

The step of storing the classified image in the timeline form includes: images of a same class are stored in one large file, and the images of the same class in the same period of time are stored in the timeline form, wherein the same period of time includes at least one of: an hour, a day, a week, a month and a year. For example, images captured when the child smiles are divided into the same class and stored in one large file (such as a smiling file), and in the smiling folder, the smiling images of the child are stored according to a time sequence. Similarly, images captured when the child cries are divided into the same class and stored in one large file (such as a crying file), and the crying images are stored according to a time sequence, referring to Fig. 4.

Step S4: An access right and a sending right are set for the classified image stored in the timeline form.

The step of setting the access right and the sending right includes: different access rights and the sending rights are set for images of different classes. Specifically, different access rights and/or the sending rights are set for the stored images, and the images of different classes are accessed and/or sent according to the rights.

Fig. 2 is a structure diagram of a video monitoring system based on smart home according to the present disclosure.

As shown in Fig. 2, the video monitoring system based on smart home according to the present disclosure includes capturing equipment 1, storage equipment 2 and a mobile terminal or client 3.

The capturing equipment 1, which is configured to capture an image according to a preset triggering condition, and send the captured image to the storage equipment 2.

In the present disclosure, the triggering condition is appearance of a specific person in the image and specific performance of the specific person. The specific person is a preset target person, such as a child, and the specific performance is an emotion change, such as smiling and crying.

Specifically, the capturing equipment 1, configured to detect in real time whether a current image meets the preset triggering condition of image capturing or not, when the triggering condition is met, capture the current image and send the captured current image to the storage equipment 2 for storage, and when the triggering condition is not met, continue detecting whether a next image meets the triggering condition of image capturing or not until the triggering condition of image capturing is met.

The storage equipment 2 is connected with the capturing equipment 1, and is configured to receive the image sent by the capturing equipment 1, classify the captured image according to different specific performance of the specific person and store the classified image in a timeline form, wherein the operation of classifying the captured image according to different specific performance of the specific person includes: images of the specific person in different emotions are captured, and the captured images are classified according to the corresponding emotions. The step of storing the classified image in the timeline form includes: images of the same class are stored in one large file, and the images of the same class in the same period of time are stored in the timeline form, wherein the same period of time includes at least one of: an hour, a day, a week, a month and a year. For example, still in the abovementioned example, images captured when the child smiles are stored in one large folder, and the smiling images are stored according to a time sequence for a user to access and view.

In the example embodiment of the present disclosure, the storage equipment includes, but not limited to, local storage equipment and/or cloud storage equipment. In an implementation mode, the captured image may be automatically loaded to the local storage equipment or the cloud storage equipment.

It is important to note that the local storage equipment refers to locally classifying the images captured by a camera into different folders according to different emotions and storing the classified images according to the time sequence, and the local storage equipment is further configured to receive access of the mobile terminal. The cloud storage equipment refers to classifying on a cloud the images captured by the camera into different folders according to different emotions and storing the classified images according to the time sequence, and the cloud storage equipment is further configured to receive access of the mobile terminal.

The mobile terminal or client 3 is connected with the storage equipment 2, and configured to set the triggering condition of image capturing, set an access right and a sending right for the image stored in the storage equipment 2, and access and receive the image stored in the storage equipment 2.

In an example embodiment, the user presets the triggering condition of image capturing through the mobile terminal or client 3. The mobile terminal or client is further configured to set the access right and the sending right for the image stored in the storage equipment 2. Specifically, different access right levels and different sending right levels are set for images of different classes. Specifically, the different access rights and the sending rights are set for the smiling image folder of the child.

As mentioned above, the video monitoring system based on smart home according to the present disclosure is introduced in detail. According to the present disclosure, images of specific persons and scenarios meeting triggering conditions are captured, according to the triggering conditions, the images are stored in corresponding folders in the timeline form, and different rights are set for mobile terminals, so that different mobile terminals may receive or access in real time the images of different scenarios in the corresponding folders. Therefore, the present disclosure can closer to family life besides providing a common security function.

The below is a specific example of the present disclosure.

Fig. 3 is a structure diagram of a system according to a specific example of the present disclosure.

The video monitoring system based on smart home includes multiple mobile terminals, a camera, local storage equipment and cloud storage equipment. The mobile terminals, the camera, the local storage equipment and the cloud storage equipment are connected through a network (wired or wireless network). The mobile terminals include, but not limited to, terminals such as a smart phone and a computer.

Here, the technical solution of the present disclosure is described with a family life scenario as an example. It is supposed that family members include a father A, a mother B, a child C and a foreign grandpa or grandma D.

The father A or the mother B presets a triggering condition of image capturing through a mobile terminal or a client (or setting through a client Application (APP) or through a client webpage). The triggering condition of image capturing is set to be that: an image is captured when the child smiles or an image is captured when the child cries. In the example, a specific person is the child C, and specific performance is smiling or crying.

When the child C appears in a picture of the camera and the child C smiles or cries, the current picture in the camera is captured. For example, when the child smiles when watching television or playing with a toy or playing with a pet, the camera captures an image when the child C smiles. Similarly, when the child cries, the camera captures an image when the child C cries.

In the embodiment of the present disclosure, the specific performance of the specific person may be acquired by a sound acquisition sensor or a pickup function of the camera, so that smiling, crying or the like of the child C is identified. A smiling or crying emotion of the child C may be identified through face identification and expression identification technologies. Sound identification, face identification and expression identification may be implemented by adopting related solutions in a related art, and will not be elaborated.

An implementation process of the present disclosure will be elaborated below.

For example, on January 1st, the camera acquires and identifies, through the face identification, sound identification and expression identification technologies, images for many times when the child C smiles while watching television. Images when the child C smiles while playing with the toy are acquired for many times on January 4th, and images when the child C smiles while playing with the pet are acquired for many times on January 8th. All the images acquired when the child C smiles are divided into the same class and stored in a smiling folder, and the classified smiling images are stored according to a timeline and index information shown in Fig. 4. Similarly, all images acquired when the child C cries are divided into the same class and stored in a crying folder, and the classified crying images are stored according to a timeline and index information shown in Fig. 3.

Fig. 4 is a schematic diagram of storing a captured image according to a timeline in a specific example of the present disclosure.

Referring to Fig. 4, the smiling images or the crying images are stored according to the timeline based on the above classification, a unit T of the timeline may be at least one of: an hour, a calendar day, a week, a month and a year, and the time unit is flexibly set according to a requirement of a user. As shown in Fig. 4, a length of the timeline in the embodiment is a month, that is, smiling images of the child C on different dates in January are stored according to a time sequence.

In the present disclosure, different access rights and/or sending rights may be set for the images of different classes (i.e. the smiling folder or the crying folder) in the storage equipment through the mobile terminal and/or client.

For example, the father A sets the access right of the images in the smiling folder to be completely open, that is, all the mobile terminals or clients may access the folder including the smiling images of the child C, so that the mobile terminals or clients of the mother B and the grandpa or grandma D may access the smiling folder or receive the images sent from the smiling folder. The father A sets the access right or the sending right of the crying folder to be limited, that is, merely the mobile terminals or clients of the father A and the mother B may access the crying folder or receive the images sent from the folder, and these images are hidden for the mobile terminal or client of the grandpa or grandma D.

For example, the father A sets that the mobile terminal or client of the grandpa or grandma D may receive in real time the smiling images of the child C and the crying images of the child C are not sent to the grandpa or grandma D, so that the old can feel happy about growth of the child and not worried about troubles in growth of the child. For making the mother know better about the child, it may set that the mobile terminal or client of the mother B has a right to receive in real time the crying images of the child C and/or access in real time the crying folder, so that the mother may know better about a need of the child and focus better on growth of the child.

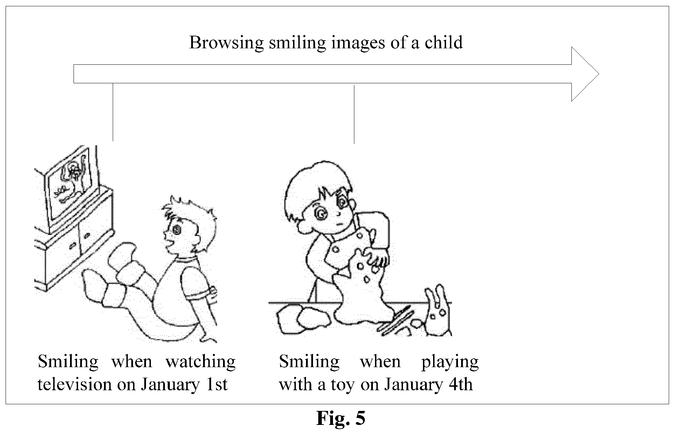

Fig. 5 is a diagram of interface display when a smiling folder is accessed according to a specific example of the present disclosure.

When a mobile terminal or a client accesses the smiling folder of the child C, the interface of the mobile terminal or the client is shown in Fig. 5. The classified images are stored in a timeline form, so that the mobile terminal or client may access the images more intuitively.

As mentioned above, the video monitoring system based on smart home according to the present disclosure is introduced in detail. The triggering condition of image capturing is preset, whether the current image meets the preset triggering condition or not is detected in real time, and when a detecting result is that the current image meets the preset triggering condition, the current image is captured, the captured image is classified according to the specific performance, and the classified image is stored in the timeline form. In addition, different access rights and receiving rights are set for different mobile terminals or clients, so that different mobile terminals may receive or access in real time the images of different emotions. Therefore, the present disclosure closers to a family life scenario besides providing a common security function.

As mentioned above, by the video monitoring method and system based on smart home provided by the present disclosure, the images may be automatically classified, stored and managed, interestingness value of video monitoring besides security protection value is provided for the user, the family is cohered, and the method and the system are closer to a family scenario.

It should be understood that the specific implementation mode of the present disclosure is intended merely to exemplarily describe or explain the principle of the present disclosure and not to form limits to the present disclosure. Therefore, any modifications, equivalent replacements, improvements and the like made without departing from the spirit and scope of the present disclosure shall fall within the scope of protection of the present disclosure. In addition, the appended claims of the present disclosure are intended to cover all varied and modified examples falling within the scope and boundary of the appended claims or an equivalent form of the scope and the boundary.

## Claims

1. A video monitoring method based on smart home, comprising:
presetting and storing a triggering condition of image capturing, wherein the triggering condition is appearance of a specific person in an image and specific performance of the specific person;
detecting in real time whether a current image meets the triggering condition or not;
when a detecting result is that the current image meets the triggering condition, capturing the current image, classifying the captured image according to different specific performance of the specific person, and storing the classified image in a timeline form; and
setting an access right and a sending right for the classified image stored in the timeline form.

2. The method as claimed in claim 1, wherein the specific person is a preset target person, and the specific performance is an emotion change.

3. The method as claimed in claim 1, wherein classifying the captured image according to different specific performance of the specific person comprises:
capturing images of the specific person in different emotions, and classifying the captured images according to corresponding emotions.

4. The method as claimed in claim 1, wherein storing the classified image in the timeline form comprises:
storing images of a same class in one large file, and storing in the timeline form the images of the same class in a same period of time, wherein the same period of time comprises at least one of: an hour, a day, a week, a month and a year.

5. The method as claimed in claim 1, wherein setting the access right and the sending right comprises: setting different access rights and different sending rights for images of different classes.

6. A video monitoring system based on smart home, comprising:
capturing equipment (1), configured to capture an image according to a preset triggering condition and send the captured image to storage equipment (2), wherein the triggering condition is appearance of a specific person in the image and specific performance of the specific person;
the storage equipment (2), configured to receive the image sent by the capturing equipment (1), classify the captured image according to different specific performance of the specific person and store the classified image in a timeline form; and
a mobile terminal or client (3), configured to set the triggering condition of image capturing, set an access right and a sending right for the image stored in the storage equipment, and access and receive the image stored in the storage equipment (2).

7. The system as claimed in claim 6, wherein the specific person is a preset target person, and the specific performance is an emotion change.

8. The system as claimed in claim 6, wherein the storage equipment (2), configured to store images of a same class in one large file and store in the timeline form the images of the same class in the same period of time, wherein the same period of time comprises at least one of: an hour, a day, a week, a month and a year.

9. The system as claimed in claim 7 or 8, wherein the storage equipment (2) comprises local storage equipment and/or cloud storage equipment.

10. The system as claimed in claim 6, wherein the mobile terminal or client (3) is configured to set the access right and the sending right for the image stored in the storage equipment (2), comprising to set different access right levels and the different sending right levels for images of different classes.
